(19) Europäisches Patentamt
European Patent Office
Office européen des brevets

(11) **EP 2 045 777 A2**

(12) **EUROPEAN PATENT APPLICATION**

(43) Date of publication:
**08.04.2009 Bulletin 2009/15**

(51) Int Cl.:
***G06T 11/40*** (2006.01)

(21) Application number: **08165716.5**

(22) Date of filing: **02.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.10.2007 JP 2007261073**

(71) Applicant: **Seiko Epson Corporation**
**Tokyo 163-0811 (JP)**

(72) Inventors:
• **Sawazaki, Takashi**
**Nagano 392-8502 (JP)**
• **Ono, Yoshiyuki**
**Nagano 392-8502 (JP)**
• **Saito, Akira**
**Kanagawa-ken 215-0034 (JP)**

(74) Representative: **HOFFMANN EITLE**
**Patent- und Rechtsanwälte**
**Arabellastrasse 4**
**81925 München (DE)**

(54) **Rendering device, image output device, computer-readable storage medium, method, computer program and computer**

(57) A rendering device includes: a outline rendering unit that renders outlines of a character on a rendering area, based on outline data of the character; a specifying unit that specifies a data size of a variable which increases/decreases depending on a drawing direction of each of the outlines, when the rendering area where the outlines are rendered is scanned along predetermined scan lines; a variable storage unit that scans the rendering area where the outlines are rendered, for each of the scan lines, and stores the variable of the data size specified by the specifying unit, for each of pixels existing on the each of the scan lines; and a paint unit that specifies areas inside the outlines on the rendering area, based on the variable stored by the variable storage unit, and arranges pixels of a rendering color in the specified areas.

*FIG. 6*

## Description

## Background

1. Technical Field

The present invention relates to a technology for rendering a text image.

2. Related Art

An outline font system is well known as a text font system. According to the outline font system, outlines of a character are rendered on a bit map memory. Pixels of a rendering color are arranged in areas inside the outlines, and the areas are then painted with a specified rendering color. In this manner, it is possible to express characters. One method used to paint areas inside given outlines is a so-called even-odd method, which is also referred to as an odd/even determination method. Another method is a so-called non-zero winding number method, which is also referred to as a non-zero filling method.

In the even-odd method, a bit map memory on which outlines are rendered is scanned in an x-axis direction. Outlines between an "odd-numbered outline" counted from a scan start point and a next "even-numbered outline" are painted. In the non-zero winding number method, a variable starting from an initial number zero referred to as a "number of windings" or a "winding number" is prepared in advance. At each of cross points between outlines and scan lines, a winding number is increased or decreased depending on a direction of drawing of each of the outlines. An area where the winding number is not "0" is painted. More specifically, at first, the bit map memory on which outlines are rendered is scanned for each of scan lines in the x-axis direction. If a drawing direction of a outline is upward (i.e., in a direction in which the y-coordinate value increases) at each of cross points between the scan lines and the character "1" is added to the winding number. In contrast, if a drawing direction of a outline is downward (i.e., in a direction in which the y-coordinate value decreases) at each of the cross points, the winding number is reduced by "1". These processings are carried out to obtain a winding number for each pixel on scan lines. As a result, if the winding number is zero, pixels corresponding to the winding number are determined to be outside outlines. If the winding number is not "0", corresponding pixels are determined to be inside outlines, and pixels of a rendering color are arranged in areas inside the outlines.

In the even-odd method, unpainted pixels may remain in an area where strokes of a character overlap each other. In the non-zero winding number method, such unpainted pixels do not appear. However, the non-zero winding number method suffers from a drawback in that a large amount of load is required to be carried out when a designer of a font wishes to newly design and describe outline data. For example, JP-A-6-251164 discloses a technology in which the even-odd method and the non-zero winding number method are alternatively used.

JP-A-5-265428 discloses a technology relating to the non-zero winding number method. According to this publication, information concerning pixels constituting outlines is stored, pixel-by-pixel, into a bit map memory. At this time, for each of these pixels, "winding number information" which contains and indicates a drawing direction of a outline and information on a number of overlaps created within the outlines is stored jointly. Further, a winding number (W number) is obtained for each pixel by referring to winding number information stored in association with a corresponding pixel during sequential scanning of the bit map memory. Further, JP-A-5-265428 provides an example in which a first three bits of 16 bits prepared for each pixel of the bit map memory are treated as a writing area for the winding number information described above, and the last 13 bits of the 16 bits are treated as a writing area for the winding number information. In this manner, seven winding numbers of "0", "+1", "+2", "+3", "-1", "-2", and "-3" can be described by assigning three bits for a data size of winding number information.

If plural overlapping strokes cause several outlines of strokes to overlap each other at a single point, use of seven winding numbers as disclosed in JP-A-5-265428 is very convenient. However, if plural strokes connect with each other according to the outline font system, entire outlines of these strokes can be expressed by one outline only. For almost all character patterns, one bit is sufficient for a data size of a winding number. Accordingly, even if three bits are prepared as a write area for a winding number as disclosed in JP-A-5-265428, 2 (=3-2) bits are not used in excess, in contrast to the case of conventional arts. Besides, a storage area for storing such excess bits need to be securely maintained in the bit map memory. Therefore, the technology described in JP-A-5-265428 does not enable efficient use to be made of the bit map memory. On the other hand, a case exists where a winding number equivalent to two bits or more may be required, although this is a relatively rare case. In short, however, it is apparent that maintaining a writing area of one bit only may not always be sufficient.

## Summary

In view of the foregoing, the present invention provides a technology capable of carrying out a processing for painting areas inside outlines of a character, by using a winding number for which an adequate data size is applicable. A rendering device, an image output device, a computer-readable storage medium, a method, a computer program and a computer program product according to the invention are defined in the appended claims.

According to one aspect of the present invention, there is provided a rendering device including: a outline rendering unit that renders outlines of a character on a rendering area, based on outline data of the character; a specifying unit that specifies a data size of a variable which increases/decreases depending on a drawing direction of each of the outlines, when the rendering area where the outlines are rendered is scanned along predetermined scan lines; a variable storage unit that scans the rendering area where the outlines are rendered, for each of the scan lines, and obtains and stores the variable of the data size specified by the specifying unit, for each of pixels existing on the each of the scan lines; and a paint unit that specifies areas inside the outlines on the rendering area, based on the variable stored by the variable storage unit, and arranges pixels of a rendering color in the specified areas, thereby to paint the specified areas in the rendering color.

By the rendering device described above, a variable having a specified data size can be used when performing a processing for painting areas inside outlines of a character.

In an alternative configuration of the rendering device described above, the variable storage unit obtains the variable by performing a wraparound processing for returning a value of the variable to zero when the variable overflows the data size specified by the specifying unit.

By use of the configuration as described above, the value of the variable returns to zero when the variable overflows a data size specified by the specifying unit. Thus, in contrast to known arts, in the present invention when error processing is being performed and a variable overflows a predetermined data size, it is not necessary to halt any other processings that are being carried out.

In a still alternative configuration of the rendering device described above, the outline rendering unit makes a determination on whether the outlines protrude beyond ends of the rendering area, when the outlines are rendered on the rendering area, based on positions of the outlines, which positions are calculated based on the outline data of the character; and if as a result of the determination, if one of the outlines protrudes beyond the rendering area in an extending direction of the scan lines, the outline rendering unit sets an end of the rendering area as a position of the protruding one of the outlines; or if as a result of the determination, if one of the outlines protrudes beyond the rendering area in a direction perpendicular to the extending direction of the scan lines, the outline rendering unit removes the protruding one of the outlines.

By using the configuration described above, an area inside a outline can be painted even when a outline protrudes beyond an end of the rendering area in a case where positions of outlines on the rendering area are calculated based on outline data of a character and outlines are rendered based on the calculated positions.

In a still alternative configuration of the rendering device described above, instruction information indicating a data size of a variable is written in a program, and the specifying unit specifies the data size indicated by the instruction information as the data size of the variable, which size may be subject to an increase or decrease.

By using the configuration described above, a data size indicated by instruction information written in a program can be specified as a data size of the variable.

In a still alternative configuration of the rendering device described above, the outline data includes instruction information indicating a data size of a variable, and the specifying unit specifies the data size indicated by the instruction information, as the data size of the variable which increases/decreases.

With the configuration as described above, a data size indicated by instruction information included in outline data can be specified as the data size of the variable.

In a still alternative configuration of the rendering device described above, the specifying unit specifies, as the data size of the variable, a data size specified in accordance with a manipulation by a user.

With the configuration as described above, a data size specified by a user can be specified as the data size of the variable.

According to another aspect of the invention, there is provided an image output device including: the rendering device according to the one aspect of the invention or one of alternative configurations described above; and an output unit that outputs, as a character image, a result of painting the specified areas in the rendering color by the painting unit of the rendering device.

By the image output device described above, a variable having a specified data size can be used when performing a processing for painting areas inside outlines of a character. Further, a character image obtained by such painting can be output according to, for example, a display scheme or printing scheme.

According to still another aspect of the invention, there is provided a program causing a computer to function as: a outline rendering unit that renders outlines of a character on a rendering area, based on outline data of the character; a specifying unit that specifies a data size of a variable which increases/decreases depending on a drawing direction of each of the outlines, when the rendering area where the outlines are rendered is scanned along predetermined scan lines; a variable storage unit that scans the rendering area where the outlines are rendered, for each of the scan lines, and obtains and stores the variable of the data size specified by the specifying unit, for each of pixels existing on the each of the scan lines; and a paint unit that specifies areas inside the outlines on the rendering area, based on the variable stored by the variable storage unit, and arranges pixels of a rendering color in the specified areas, thereby to paint the areas in the rendering color.

By the program described, a variable having a specified data size can be used when performing a processing for painting areas inside outlines of a character.

## Brief Description of the Drawings

The invention will be described with reference to the accompanying drawings, wherein like numbers reference like elements:

FIG. 1 shows an example of an image displayed on an image display device;

FIG. 2 is a diagram illustrating outlines connecting control points;

FIG. 3 is a table showing a structure of a font data set;

FIG. 4 shows a state in which outlines are formed by outlines and inside of the outlines is painted;

FIG. 5 shows a structure of an image display device according to an embodiment of the invention;

FIG. 6 shows a structure of a font processor 25;

FIG. 7 is a flowchart showing an operation of a outline calculation module;

FIG. 8 is a flowchart showing another operation of the outline calculation module;

FIG. 9 is a flowchart showing still another operation of the outline calculation module;

FIG. 10 is a flowchart showing still another operation of the outline calculation module;

FIG. 11 is a flowchart showing still another operation of the outline calculation module;

FIG. 12 is a flowchart showing an operation of a paint/background-composite/transfer module 255;

FIG. 13 is a flowchart showing an operation of a outline calculation module according to Modification 1; and

FIG. 14 shows an example of a processing for rendering outlines of a character "A" in Modification 2.

## Description of Exemplary Embodiment

### 1. Font data set

A font data which is used as outline data in the embodiment will now be described first. The embodiment uses a font data set of an outline font, particularly, of a type referred to as TTF (True Type Font).

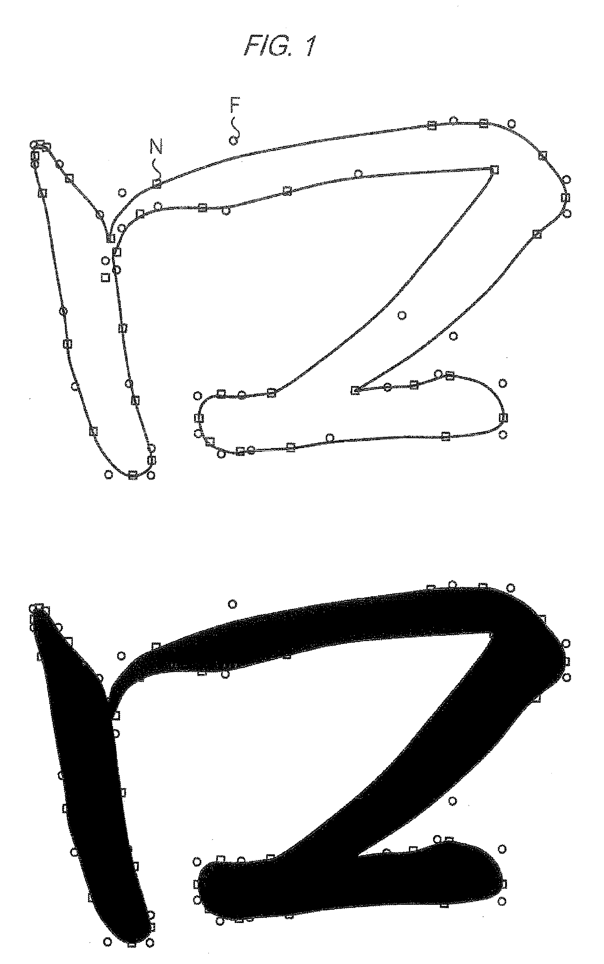

FIG. 1 illustrates content of a TTF. In an upper part of FIG. 1, a character "□ " (a Japanese Kanji character) of a TTF is shown. Rectangular and circular marks which are located along outlines of the character are all referred to as "control points". The rectangular marks are on-curve points, and the circular marks are off-curve points (as will be denoted in the same manner in subsequent figures). In a TTF, outlines of a character are expressed by one or plural "contours". Here, a term "contour" refers to a line between two control points. The line is expressed by an equation (for example, an equation expressing a straight line or an equation expressing a two-dimensional Bezier curve). The closed drawn shapes express outlines of the character. For example, if on-curve points exist sequentially, each two adjacent control points of the on-curve points are connected to each other by a line. Otherwise, if an off-curve point exists, two adjacent on-curve points existing on two sides of the off-curve point are connected by a two-dimensional Bezier curve. Still otherwise, if two off-curve points are adjacent to each other, an on-curve point is supplementally added in the middle between the two off-curve points.

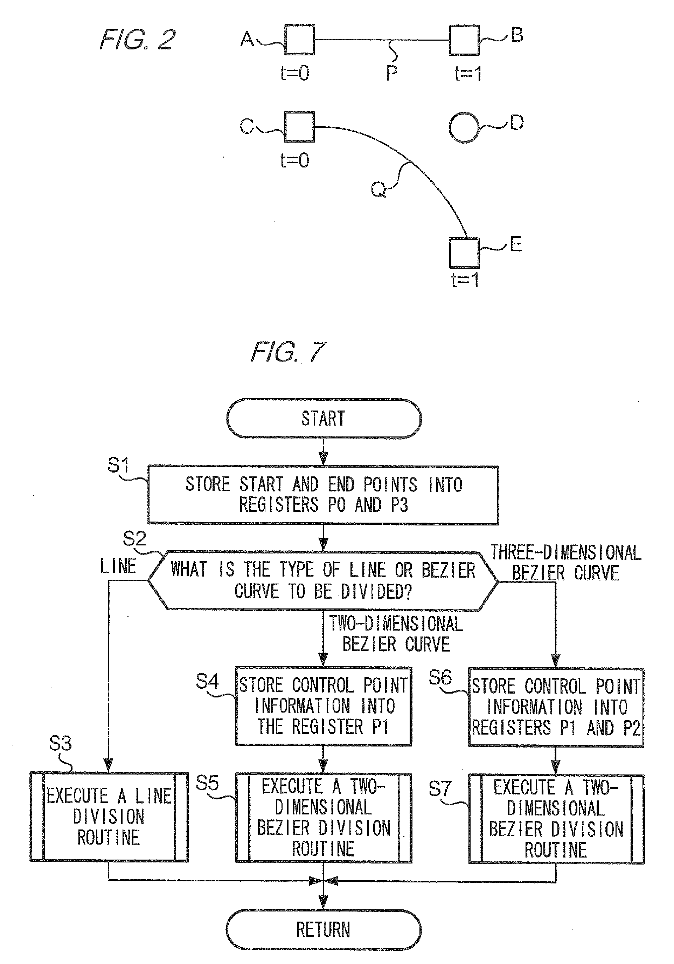

FIG. 2 shows a state of rendering a outline of a character on a rendering area on a bit map memory.

Provided that control points A, B, C, and E shown as an example in FIG. 2 are on-curve points and a control point D is an off-curve point, a line A-B and a two-dimensional Bezier curve C-D-E are respectively expressed as a set of points P (a line) and a set of points Q (a two-dimensional Bezier curve) which are expressed by the following equations:

$$P = (1 - t)A + tB$$

$$Q = (1 - t)^2 C + 2t(1 - t)D + t^2 E$$

In the above expressions, $t$ is a parameter which continuously varies within a range of $0 \le t \le 1$. If $t = 0$ on the line A - B, the point P corresponds to the point A. If $t = 1$ on the line A - B, the point P corresponds to the point B. Similarly, if $t = 0$ on the two-dimensional Bezier curve C-D-E, the point Q corresponds to the point C. If $t = 1$ on the two-dimensional Bezier curve C-D-E, the point Q corresponds to the point E.

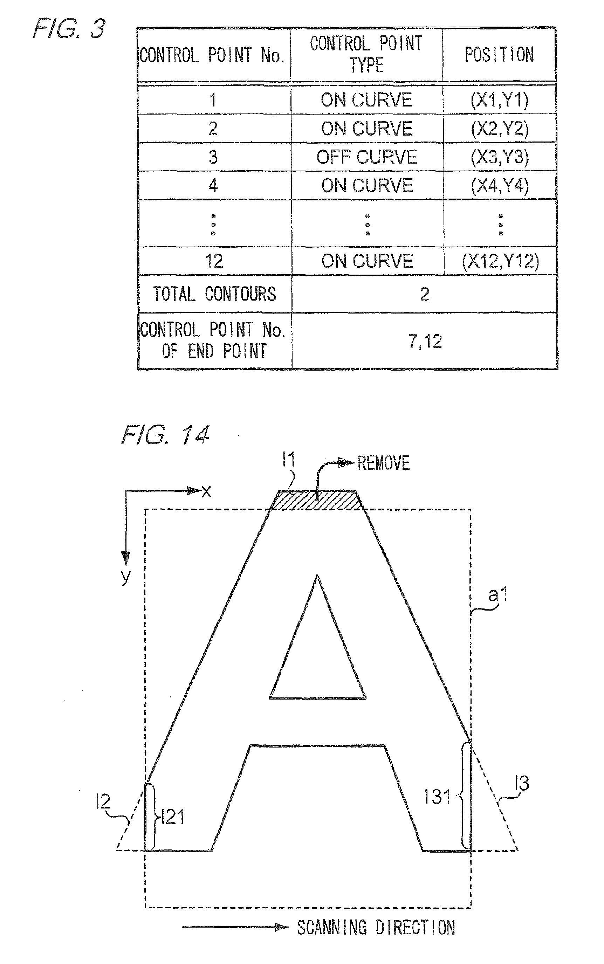

As shown in FIG. 3, one font data set is expressed as a collection of control point information sets each constituted of one of "control point numbers" assigned to a control point, a control point type (on-curve point or off-curve point) of the control point, and a "position" (x and y coordinates) of the control point on a plane. The "control point numbers" are respectively assigned to control points. Further, one font data set is associated with a total number of contours included in the font data set, and with a control point number as a termination end of each of the contours.

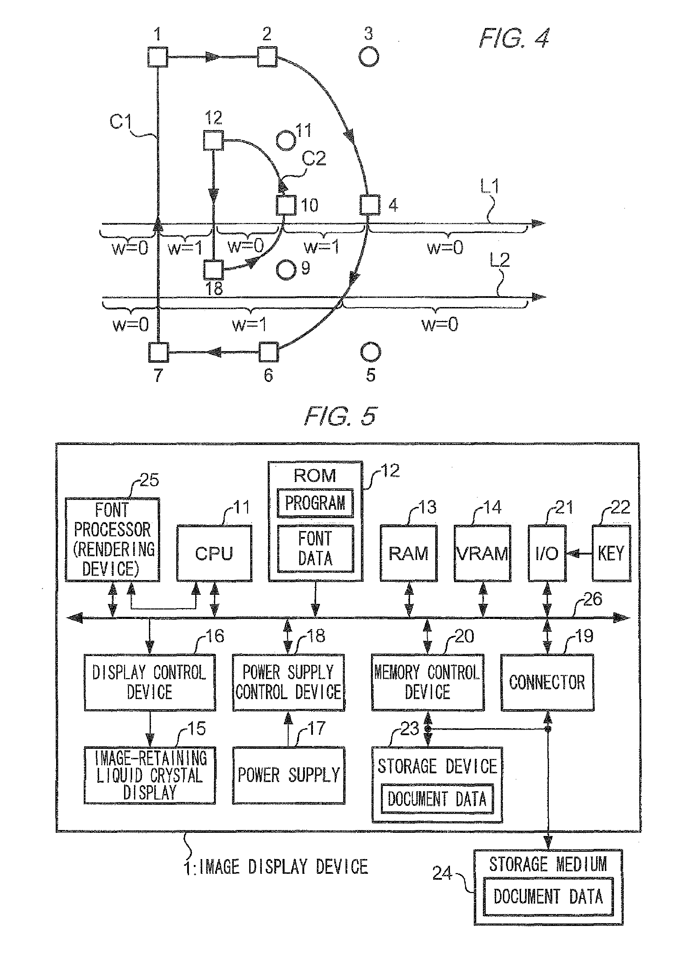

FIG. 4 illustrates a state of painting insides of outlines of a character rendered on the rendering area on the bit map memory. As shown in FIG. 4, outlines of an alphabet character "D" are expressed by two contours c1 and c2. As shown in FIG. 3, the total number of contours is "2". In case of the contour c1, the control point number of a control point at a termination end of the outline is "7". In case of the contour c2, the control point number of a control point at a termination end of the outline is "12". Accordingly, the control point numbers of control points at termination ends of contours are "7, 12" as shown in FIG. 3.

Processings for painting insides of outlines of a character rendered on a bit map memory are carried out as follows.

A rendering device such as a font processor retains a winding number (from an initial value zero) in a register or a memory. Further, the rendering device scans a rendering area where outlines of a character are rendered, along scan lines extending in a predetermined direction (normally in the $x$-axis direction), to obtain points at which the scan lines and the contours cross each other. At this time, the rendering device determines whether each contour drawn in a direction from a control point assigned with a small control point number to a control point assigned with a large control point number crosses upwards a scan line from downside or crosses downwards a scan line from upside. The rendering device adds 1 to the winding number if a determination result is to cross upwards a scan line. That is, the winding number $w$ is increased by 1 for each of pixels constituting a contour having a drawing direction extending from downside to upside. The winding number $w$ is decreased by 1 for each of pixels constituting a contour having a drawing direction extending from upside to downside. For each of pixels existing on a outline extending in the same direction as the scan line, the winding number is not changed. An increase or decrease such as "+1", "-1 ", and "$\pm$ 0 " to the winding number, as described above, is referred to as a "winding number change amount". The "winding number" and "winding number change amount" each correspond to a "parameter which increases/decreases depending on drawing directions of outlines when a rendering area where outlines are rendered is scanned along predetermined scan lines".

In this manner, scan lines L1 and L2 shown in FIG. 4 are divided into segments having respectively different winding numbers by obtaining a winding number from a winding number change amount of each pixel. The rendering device sets pixels of a rendering color in segments where the winding number w is not zero (segments having w = 1 in the figure) and is painted in a color. In segments having the winding number $w$ = 0, no painting processing is carried out. Details of this painting processing are published at: http://devcloper.apple.com/textfonts/TTRefMan/RMO2/Chap2.html

Observing the rules as described above, the rendering device forms contours in accordance with control points arranged as shown in the upper part in FIG. 1, and further paints insides of the outlines. Then, a character image "□" is generated as shown in the lower part of FIG. 1. The image is displayed on a display device or printed by a printing device. The lower part of FIG. 1 illustrates on-curve and off-curve points which are shown merely supplementarily and do not appear in an actual character image.

## 2. Structure

FIG. 5 is a block diagram showing a structure of an image display device as an example of an image output device according to the embodiment. As shown in FIG. 5, the image display device 1 includes a CPU (Central Processing Unit) 11, a ROM (Read Only Memory) 12, a RAM (Random Access Memory) 13, a VRAM (Video Random Access Memory) 14, a image-retaining liquid crystal display 15, a display control device 16, a power supply 17, a power supply control device 18, a connector 19, a storage control device 20, an I/O 21, a key 22, a storage device 23, a font processor 25, and a bus 26. The ROM 12 is a read-only memory, and stores programs executed by the CPU 11, and a font data set in which outlines of plural characters are expressed according to an outline font scheme. The CPU 11 reads out a program stored in the ROM 12, and develops the program on the RAM 13. The CPU 11 executes processings in accordance with a procedure described in the program.

A storage medium 24 such as a so-called portable removable medium is attachable/detachable to/from the connector 19. The storage medium 24 may be a card-type storage medium including a flash memory. For example, the storage medium 24 may be a disk-type storage medium which uses a magnetic medium such as a floppy (registered trademark) disk. The storage device 23 is a non-volatile storage means such as a flash memory or a hard disk. The storage device 23 or the storage medium 24 stores sentence data.

The storage control device 20 reads sentence data from the storage medium 24 or the storage device 23 and transfers the sentence data to the RAM 13. The CPU 11 instructs the font processor 25 to render a character specified by a character code included in the sentence data. The font processor 25 is a rendering device which renders the character, and reads a font data set corresponding to the character code, in accordance with an instruction from the CPU 11. The font processor 25 interprets and converts the font data set into image data, and stores the image data into the VRAM 14. The image-retraining liquid crystal display 15 is a display unit which utilizes cholesteric liquid crystal or electrophoresis, and has memory ability to maintain an image displayed even after a stop of supply of an electric power. The image data written into the VRAM 14 is supplied to the display control device 16 under an instruction from the CPU 11. The display control device 16 controls the image-retaining liquid crystal display 15, to display an image based on the image data.

The key 22 is a manipulation unit which is manipulated by a user, and may include a manipulation device such as a pen device and/or a joy stick. The I/O 21 monitors a manipulation state of the key 22. When the key 22 is manipulated by a user, the I/O 21 supplies a signal corresponding to a manipulation of the user to the CPU 11. The power supply 17 is, for example, a rechargeable battery. The power supply control device 18 performs various power supply managements such as switching ON/OFF of the power supply 17 and monitoring of remaining electric power.

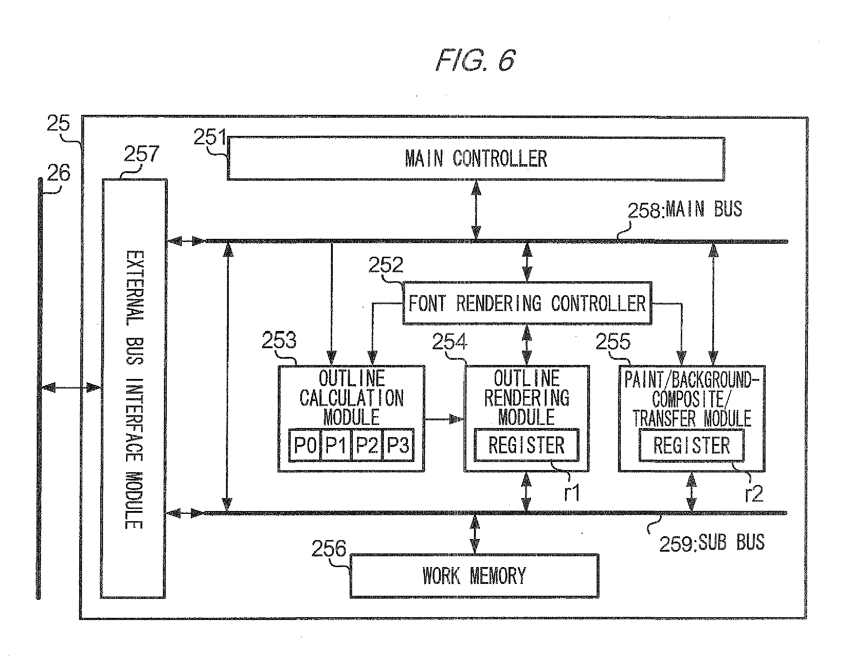

Next, FIG. 6 is a block diagram showing a structure of the font processor 25 as a rendering device.

As shown in FIG. 6, the font processor 25 includes a main controller 251, a font rendering controller 252, a outline calculation module 253, a outline rendering module 254, a paint/background-composite/transfer module 255, a work memory 256, an external bus interface module 257, a main bus 258, and a sub bus 259. The main bus 258 is connected to the main controller 251, font rendering controller 252, outline calculation module 253, and paint/background-composite/transfer module 255. The sub bus 259 is connected to the outline rendering module 254, paint/background-composite/transfer module 255, and work memory 256. The external bus interface module 257 performs control so that access may not made simultaneously to the outline calculation module 253, outline rendering module 254, and paint/background-composite/transfer module 255 which are connected through the main bus 258, and so that data may not be exchanged between the bus 26, main bus 258, and sub bus 259.

The main controller 251 controls the font processor 25. The work memory 256 is a storage unit having a rendering area for rendering a character. The outline calculation module 253, outline rendering module 254, and paint/background-composite/transfer module 255 cooperate with each other to render a character on the work memory 256. The font rendering controller 252 controls the outline calculation module 253, outline rendering module 254, and paint/background-composite/transfer module 255. Further, in accordance with instructions and/or notifications from the CPU 11, the font rendering controller 252 notifies the outline calculation module 253 of information such as an affine transformation parameter. Also in accordance with such instructions and/or notifications form the CPU 11, the font rendering controller 252 notifies the outline rendering module 254 of information such as a bit width (data size) which can be used as a storage area for storing a winding number change amount. Also in accordance with such instructions and/or notifications, the font rendering controller 252 notifies the paint/background-composite/transfer module 255 of a bit width (data size) which can be used as a storage area for storing a winding number, and of information such as a range of coordinate values of each pixel. The outline calculation module 253, outline rendering module 254, and paint/background-composite/transfer module 255 respectively perform processings in accordance with information notified by the font rendering controller 252 from the CPU 11.

Hereinafter, each of the outline calculation module 253, outline rendering module 254, and paint/background-composite/transfer module 255 will be described.

2-1. Outline calculation module 253

The outline rendering module 254 receives font data through the external bus interfaced module 257 and the main bus 258, and carries out affine transformation by using an affine transformation parameter notified of through the font rendering controller 252 from the CPU 11. Further, the outline calculation module 253 finely divides lines or Bezier curves obtained by the affine transformation, to calculate $x$ and $y$ coordinate values of each pixel which are used to render the lines and Bezier curves (or outlines as a whole) on a rendering area in the work memory 256. The $x$ and $y$ coordinate values are coordinate values on the $x$-$y$ coordinate system in the rendering area in the work memory 256. The outline calculation module 253 has four registers P0, P1, P2, and P3, and has a stack function for retaining data according to a LIFO (Last In First Out) manner by using these registers. Each of the registers P0, P1, P2, and P3 has a capacity which is capable of storing control point information sets described previously. The stack function is utilized when the outline calculation module 253 calculates coordinate values of each pixel existing on outlines of a character to be rendered on the work memory 256. In addition, the outline calculation module 253 notifies the paint/background-composite/transfer module 255 of minimum and maximum values among calculated $x$ and $y$ coordinate values

Further, based on a drawing direction of each outline, the outline calculation module 253 calculates a winding number change amount of each of pixels existing on the outline. Specifically, the winding number change amount is "+1" for each of outlines having an upward drawing direction extending from downside to upside. Otherwise, the winding number change amount is "-1" for each of outlines having a downward drawing direction extending from upside to downside. Still otherwise, the winding number change amount is "±0" for each of outlines having a drawing direction extending in the same direction as a scanning direction. The outline calculation module 253 supplies obtained coordinate values and winding number change amounts to the outline rendering module 254.

2-2. Outline rendering module 254

The outline rendering module 254 arranges pixels of a rendering color on a rendering area in the work memory 256, at memory addresses corresponding to coordinate values supplied from the outline rendering module 25, thereby to render outlines of the character based on the font data set. At this time, if a pixel has already been arranged for rendering a outline at any of positions of pixels arranged for rendering another outline on the rendering area, the outline rendering module 254 add up winding number change amounts of two overlapping pixels at the position, and writes the added winding number change amounts. For example, if a pixel having a winding number change amount "+1" is arranged at a position where a pixel having a winding number change amount "+1" has already been arranged, the outline rendering module 254 sets 1 + 1 = "+2" as a winding number change amount for a pixel at the position. Otherwise, if a pixel having a winding number change amount "-1" is arranged at a position where a pixel having a winding number change amount "+1" has been arranged, the outline rendering module 254 sets 1 - 1 = "$\pm$0" as a winding number change amount for a pixel at the position. Still otherwise, if a pixel having a winding number change amount "$\pm$0" is arranged at a position where a pixel having a winding number change amount "$\pm$0 " has been arranged, the outline rendering module 254 sets 0 + 0 = "$\pm$0" as a winding number change amount for a pixel at the position. These examples are also applicable to a case in which three or more pixels overlap each other at one position.

The outline rendering module 254 has plural registers r1 for adding up winding number for respective pixels existing on a outline of a character. Total seven registers r1 are provided. Each one register r1 retains a 1-bit value. That is, the outline rendering module 254 can store winding numbers equivalent to seven bits at most. However, the outline rendering module 254 stores winding numbers by using only registers r1 corresponding in number to a bit width specified by the CPU 11 through the font rendering controller 252, among the seven registers r1. By using only those registers r1, the outline rendering module 254 adds up winding number change amounts. For example, if "1 bit" is specified as the bit width, the outline rendering module 254 uses only one registers r1, and therefore, two winding number change amounts of "0" and "1" (or "-1") are available. If "3 bits" is specified as a bit width, the outline rendering module 254 uses three registers r1, and therefore, seven winding number change amounts of "0", "+1", "+2", "+3", "-1", "-2", and "-3" are available. If "7 bits" are specified as a bit width, the outline rendering module 254 can use all the seven registers r1, and therefore, 127 winding number change amounts are available.

Which of the 1 bit, 2 bits, and 3 bits is used as a bit width of registers r1 for storing winding number change amounts is described in the program stored in the ROM 12. The designer of the program specifies a bit width for winding number change amounts, which is considered adequate among the 1 bit, 2 bits, and 3 bits, based on a use condition, e.g., what kind of font data set is used by the image display device 1. When preparing the program, the designer writes instruction information indicating the specified bit width into the program. When the CPU I 1 reads and executes the instruction information written in the program, the CPU 11 supplies the instruction information to the font processor 25. The font rendering controller 252 in the font processor 25 notifies the outline rendering module 254 of the bit width indicated by the instruction information, to instruct the outline rendering module 254 to use registers r1 adequate for the bit width.

2-3 Paint/background-composite/transfer module 255

After a outline is rendered on the work memory 256 by the outline rendering module 254, the paint/background-composite/transfer module 255 scans the outline along scan lines in the x-axis direction, to obtain points where the scan lines cross the outline. At this time, the paint/background-composite/transfer module 255 retains a winding number w (from an initial value zero), and adds winding number change amounts read from the work memory 256, to the winding number w at pixels at corresponding positions, respectively.

The paint/background-composite/transfer module 255 has plural registers r2 for storing winding numbers w at each pixel in the rendering area. Total seven registers r2 are provided like in case of the registers r1 described above for the outline rendering module 254. Each one registers r2 retains 1 bit value. That is, the paint/background-composite/transfer module 255 can store winding numbers equivalent to seven bits at most. However, the paint/background-composite/transfer module 255 stores winding numbers w by using only registers r2 corresponding in number to a bit width specified by the CPU 11 through the font rendering controller 252, among the seven registers r2. For example, if "1 bit" is specified as the bit width, the paint/background-composite/transfer module 255 uses only one registers r2, and therefore, two winding numbers of "0" and "1" (or "-1") are available. If "3 bits" is specified as the bit width, the paint/background-composite/transfer module 255 uses three registers r2, and therefore, seven winding numbers of "0", "+1", "+2", "+3", "-1", "-2", and "-3" are available. If "7 bits" are specified as the bit width, the paint/background-composite/transfer module 255 can use all the seven registers r2, and therefore, 127 winding numbers are available.

Which of the 1 bit, 2 bits, and 3 bits is used as a bit width for registers r2 for storing winding numbers is described in the program stored in the ROM 12, like in the foregoing case of winding numbers. The designer of the program specifies a bit width for winding numbers, which is considered adequate among the 1 bit, 2 bits, and 3 bits, based on a use condition, e.g., what kind of font data set is used by the image display device 1. When preparing the program, the designer writes instruction information indicating the specified bit width into the program. When the CPU 11 reads and executes the instruction information written in the program, the CPU 11 supplies the instruction information to the font processor 25. The font rendering controller 252 in the font processor 25 notifies the paint/background-composite/transfer module 255 of the bit width indicated by the instruction information, to instruct the paint/background-composite/transfer module 255 to use registers r2 adequate for the bit width.

Further, the paint/background-composite/transfer module 255 does not perform processings at all in segments which satisfies the winding number w = 0 on each scan line. In segments which do not satisfy the winding number w = 0 on each scan line, the paint/background-composite/transfer module 255 arranges pixels of a rendering color. In this manner, areas inside the outlines are painted to generate a character image. Then, upon necessity, the paint/background-composite/transfer module 255 generates image data in which the character image is composted with a predetermined background image. Thereafter, the paint/background-composite/transfer module 255 notifies the CPU 11 of a transfer signal commanding transfer of the image data. Accordingly, the CPU 11 writes the image data transferred form the paint/background-composite/transfer module 255 into the VRAM 14. The image data written into the VRAM 14 is supplied to the display control device 16 under an instruction from the CPU 11. The display control device 16 controls the image-retaining liquid crystal display 15 to display an image based on the image data.

3. Operation

3-1. Main routine of the outline calculation module 253

FIG. 7 is a flowchart which shows a main routine executed by the outline calculation module 253. The outline calculation module 253 receives control point information sets sequentially in an ascending order of control point numbers, the control point information sets being included in the font data set received through the external bus interface module 257 and the main bus 258. The outline calculation module 253 extracts a control point information set of an on-curve point assigned with a minimum control point number, as a control point information set of an on-curve point as a start point. Further, the outline calculation module 253 extracts a control point information set of an on-curve point assigned with a second minimum control point number, as a control point information set of an on-curve point as an end point. The outline calculation module 253 has four registers P0 to P3 as described previously, and stores the control point information set of the on-curve point as a start point into the register P0 among the four registers P0 to P3, as well as the control point information set of the on-curve point as an end point into the register P3 (step S1).

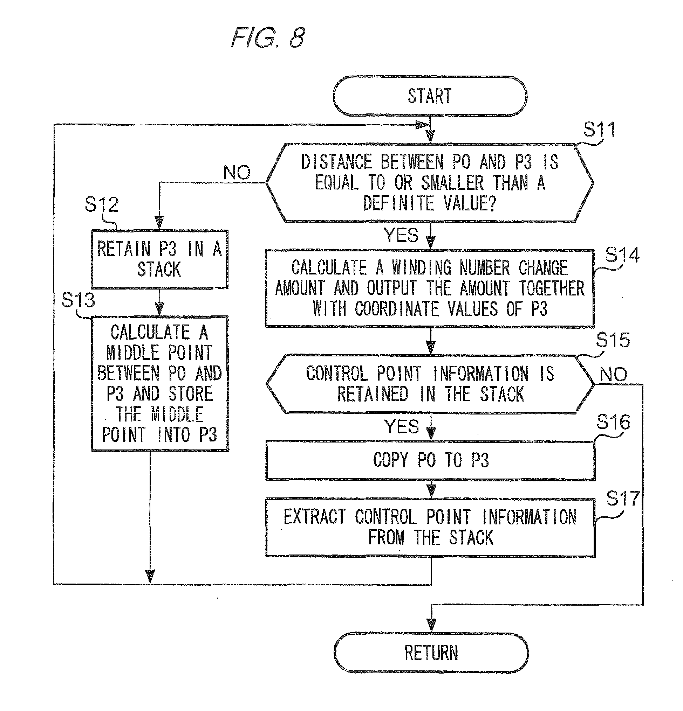

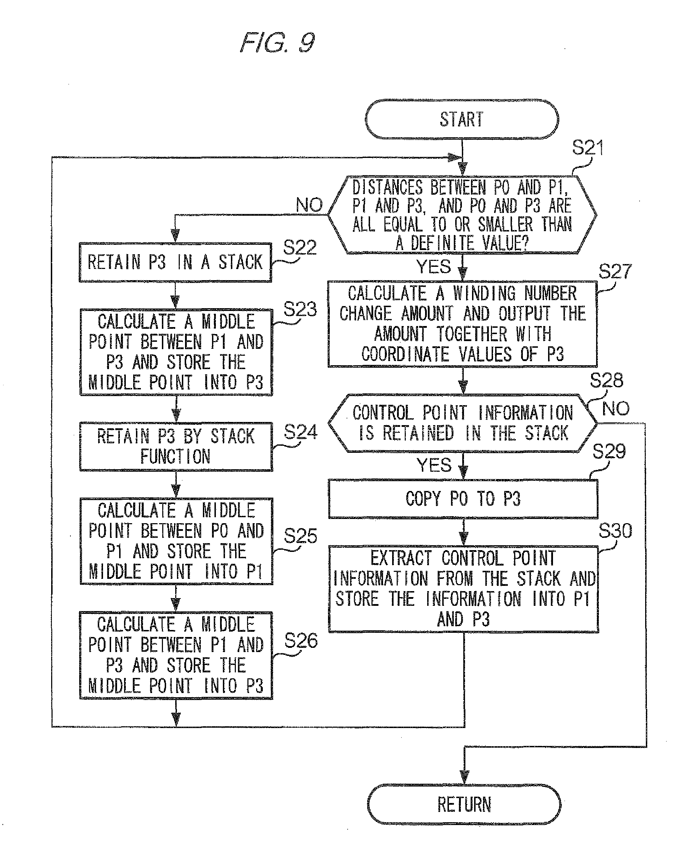

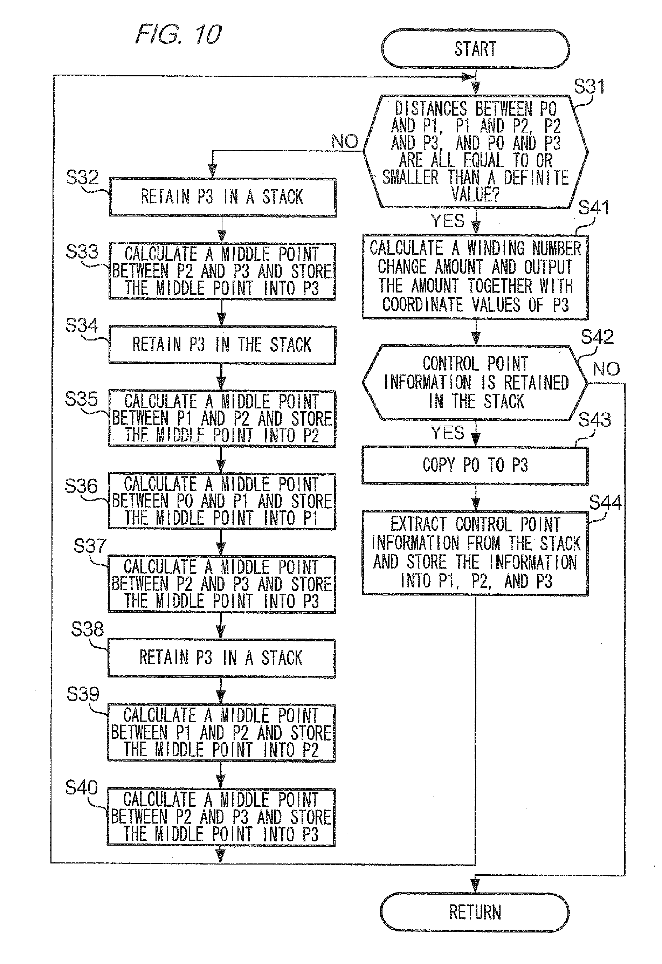

Next, the outline calculation module 253 determines a type of connection between the start and end points described above, i.e., whether the start and end points are connected by a line or a Bezier curve (step S2). If the type is a line (step S2: line), the outline calculation module 253 executes a line division routine shown in FIG. 8 (step S3) which will be described later. Otherwise, if the type is a two-dimensional Bezier curve (step S2: two-dimensional Bezier curve), the outline calculation module 253 stores, into the register P1, a control point information set of an off-curve point between the start and end points (step S4). The outline calculation module 253 further executes a two-dimensional Bezier division routine shown in FIG. 9 (step S5) which will be described later. Still otherwise, if the type is a three-dimensional Bezier curve (step S2: three-dimensional Bezier curve), the outline calculation module 253 stores, into the register P1, a control point information set of an off-curve point having the smallest control point number among off-curve points existing between the start and end points, and stores, into the register P2, an off-curve point having the greatest control point number among the off-curve points (step S6). Further, the outline calculation module 253 executes a three-dimensional Bezier division routine shown in FIG. 10 (step S7) which will be described later.

Upon completion of one of the steps S3, S5, and S7, the outline calculation module 253 returns to the step S1. The outline calculation module 253 stores the control point information set of the on-curve point which has been regarded as the end point in the processing described above, as a control point information set of an on-curve point as a start point into the register P0. Further, the outline calculation module 253 stores, into the register P3, a control point information set of an on-curve point assigned with a next smallest control point number to the control point number of the start point, as a control point information set of an on-curve point as an end point. Thus, the processings described above will be repeated. In this manner, the outline calculation module 253 performs the processings described above on all control point information sets included in a received font data set.

3-2. Line division routine of the outline calculation module 253

FIG. 8 is a flowchart showing a line division routine executed by the outline calculation module 253. In FIG. 8, the outline calculation module 253 calculates a distance on a rendering area in the work memory 256, between a control point indicated by a control point information set stored in the register P0, and a control point indicated by a control point information set stored in the register P3. The outline calculation module 253 further determines whether the calculated distance is equal to or smaller than a predetermined definite value or not (step S11), The definite value used at this time has, for example, a size equivalent to a diameter of one pixel on the rendering area. In FIG. 8, for example, the distance between the control point indicated by the control point information set stored in the register P0 and the control point indicated by the control point information set stored in the register P3 is written as "distance between P0 and P3" (which also applies to figures following FIG. 9).

If the distance calculated in the step S11 exceeds a definite value (step S11: NO), the distance between two control points is so large that a line between the two control points needs to be sub-divided into shorter lines in order to render the line. In this case, the outline calculation module 253 extracts the control point information set stored in the register P3, and retains this control point information set by the stack function (step S12). Further, the outline calculation module 253 obtains a middle point between the control point expressed by the control point information set stored in the register P0 and the control point expressed by the control point information set which has been stored in the register P3 till now. The outline calculation module 253 generates a control point information set of the middle point, and stores the generated control point information set into the register P3 (step S13). Then, the outline calculation module 253 returns to the processing of the step S11. That is, the outline calculation module 253 repeats the processing for subdividing a line between two control points until the distance between two control points as start and end points becomes sufficiently small.

Otherwise, if the calculated distance is smaller than the definite value in the step S11 (step S11: YES), the distance between the two control points is sufficiently small. In this case, the outline calculation module 253 extracts the control point information set stored in the register P3, and calculates x and y coordinate values on a rendering area in the work memory 256, form the control point information set. Simultaneously, the outline calculation module 253 calculates a winding number change amount at the start point, based on a direction (drawing direction) from the start point toward the end point. The processing for calculating the winding number change amount will be described in detail later. Further, the outline calculation module 253 outputs the calculated coordinate values and the winding number change amount to a subsequent module, i.e., the outline rendering module 254 (step S14).

Next, the outline calculation module 253 determines whether any control point information set is retained by the stack function or not (step S15). If there is a retained control point information set (step S15: YES), the outline calculation module 253 copies and stores the control point information set stored in the register P3 into the register P0 (step S16). Further, the outline calculation module 253 extracts the control point information set which has been retained by the stack function, and stores the control point information set into the register P3 (step S17). Further, the outline calculation module 253 returns again to the processing in the step S11, and repeats the processings as described above. If the outline calculation module 253 finally determines, in the step S15, that no control point information set is retained (step S15: NO), the outline calculation module 253 terminates the line division routine.

3-3. Two-dimensional Bezier division routine of the outline calculation module 253

FIG. 9 is a flowchart showing a two-dimensional Bezier division routine executed by the outline calculation module 253. In FIG. 9, the outline calculation module 253 calculates a distance between a control point indicated by a control point information set stored in the register P0 and a control point indicated by a control point information set stored in the register P1, a distance between the control point indicated by the control point information set stored in the register P1 and a control point indicated by a control point information set stored in the register P3, and a distance between the control point indicated by the control point information set stored in the register P0 and the control point indicated by the control point information set stored in the register P3. The outline calculation module 253 determines whether each of these distances is equal to or smaller than a predetermined definite value or not (step S21). The definite value used at this time has, for example, a size equivalent to a diameter of one pixel on the rendering area as described previously.

If any of those calculated distances exceeds the definite value (step S21: NO), any of the three inter-control-point distances is so large that the two-dimensional Bezier curve needs to be subdivided. In this case, the outline calculation module 253 extracts the control point information set stored in the register P3, and retains this control point information set by the stack function (step S22). Further, the outline calculation module 253 obtains a middle point between the control point expressed by the control point information set stored in the register P1 and the control point expressed by the control point information set which has been stored in the register P3 up to now. The outline calculation module 253 generates a control point information set of the middle point, and stores the generated control point information set into the register P3 (step S13). Then, the outline calculation module 253 extracts the control point information set stored in the register P3, and retains the control point information set by the stack function (step S24). Next, the outline calculation module 253 also obtains a middle point between the control point expressed by the control point information set stored in the register P0 and the control point information set which has been stored in the register P1. The outline calculation module 253 also generates a control point information set of this middle point, and stores the control point information set into the register P1 (step S25). Next, the outline calculation module 253 also obtains a middle point between the control point expressed by the control point information set stored in the register P1 and the control point information set which has been stored in the register P3. The outline calculation module 253 also generates a control point information set of this middle point, and stores the control point information set into the register P3 (step S25). Then, the outline calculation module 253 returns again to the processing of the step S21.

Otherwise, if the calculated distances are all equal to or smaller than the definite value in the step 21 (step S21: YES), the outline calculation module 253 extracts the control point information set stored in the register P3, and calculates x and y coordinate values on the rendering area on the work memory 256, and calculates a winding number change amount at a start point on the basis of a direction (drawing direction) extending from the start point toward an end point. A calculation processing for calculating the winding number change amount will be described in detail later. Further, the outline calculation module 253 outputs the calculated coordinate values and winding number change amount to a subsequent module, i.e., the outline rendering module 254 (step S27).

Next, the outline calculation module 253 determines whether any control point information set is retained by the stack function or not (step S28). If there is a retained control point information set (step S28: YES), the outline calculation module 253 copies and stores the control point information set stored in the register P3 into the register P0 (step S29). Further, the outline calculation module 253 sequentially extracts two control point information sets which have been retained by the stack function, and stores the two control point information sets respectively into the registers P1 and P3 (step S30). Further, the outline calculation module 253 returns again to the processing in the step S21, and repeats the processings as described above. If the outline calculation module 253 finally determines, in the step S28, that no control point information set is retained (step S28: NO), the outline calculation module 253 terminates the two-dimensional Bezier division routine.

3-4. Three-dimensional Bezier division routine of the outline calculation module 253

FIG. 10 is a flowchart showing a three-dimensional Bezier division routine executed by the outline calculation module 253. In FIG. 10, the outline calculation module 253 calculates a distance between a control point indicated by a control point information set stored in the register P0 and a control point indicated by a control point information set stored in the register P1, a distance between the control point indicated by the control point information set stored in the register P1 and a control point indicated by a control point information set stored in the register P2, a distance between the control point indicated by the control point information set stored in the register P2 and a control point indicated by a control point information set stored in the register P3, and a distance between the control point indicated by the control point information set stored in the register P0 and the control point indicated by the control point information set stored in the register P3. The outline calculation module 253 determines whether each of these distances is equal to or smaller than a predetermined definite value or not (step S31). The definite value used at this time has, for example, a size equivalent to a diameter of one pixel on the rendering area as described previously.

If any of those calculated distances exceeds the definite value (step S21: NO), any of the four inter-control-point distances is so large that the three-dimensional Bezier curve needs to be subdivided. In this case, the outline calculation module 253 extracts the control point information set stored in the register P3, and retains this control point information set by the stack function (step S32). Further, the outline calculation module 253 obtains a middle point between the control point expressed by the control point information set stored in the register P2 and the control point expressed by the control point information set which has been stored in the register P3. The outline calculation module 253 generates a control point information set of the middle point, and stores the generated control point information set into the register P3 (step S33).

Next, the outline calculation module 253 obtains a middle point between the control point expressed by the control point information set stored in the register P1 and the control point expressed by the control point information set which has been stored in the register P2. The outline calculation module 253 also generates a control point information set of this middle point, and stores the generated control point information set into the register P1 (step S35). Next, the outline calculation module 253 also obtains a middle point between the control point expressed by the control point information set stored in the register P0 and the control point expressed by the control point information set which has been stored in the register P1. The outline calculation module 253 also generates a control point information set of this middle point, and stores the generated control point information set into the register P1 (step S36). Next, the outline calculation module 253 obtains a middle point between the control point expressed by the control point information set stored in the register P2 and the control point expressed by the control point information set which has been stored in the register P3. The outline calculation module 253 generates a control point information set of this middle point, and stores the generated control point information set into the register P3 (step S37). Then, the outline calculation module 253 extracts the control point information set stored in the register P3, and retains the control point information set by the stack function (step S38).

Next, the outline calculation module 253 obtains a middle point between the control point expressed by the control point information set stored in the register P1 and the control point expressed by the control point information set which has been stored in the register P2. The outline calculation module 253 also generates a control point information set of this middle point, and stores the generated control point information set into the register P2 (step S39). Next, the outline calculation module 253 also obtains a middle point between the control point expressed by the control point information set stored in the register P2 and the control point expressed by the control point information set which has been stored in the register P3. The outline calculation module 253 generates a control point information set of this middle point, and stores the generated control point information set into the register P3 (step S40). Then, the outline calculation module 253 returns to the processing of the step S31 again.

If the calculated distances are all equal to or smaller than the definite value in the step 31 (step S31: YES), the outline calculation module 253 extracts the control point information set stored in the register P3, and calculates x and *y* coordinate values on the rendering area on the work memory 256, and calculates a winding number change amount at a start point on the basis of a direction (drawing direction) extending from the start point toward an end point. A calculation processing for calculating the winding number change amount will be described in detail later. Further, the outline calculation module 253 outputs the calculated coordinate values and winding number change amount to a subsequent module, i.e., the outline rendering module 254 (step S41).

Next, the outline calculation module 253 determines whether any control point information set is retained by the stack function or not (step S42). If there is a retained control point information set (step S42: YES), the outline calculation module 253 copies and stores the control point information set stored in the register P3 into the register P0 (step S43). Further, the outline calculation module 253 sequentially extracts three control point information sets which have been retained by the stack function, and stores the three control point information sets respectively into the registers P1, P2, and P3 (step S44). Further, the outline calculation module 253 returns again to the processing of the step S31, and repeats the processings as described above. If the outline calculation module 253 finally determines, in the step S42, that no control point information set is retained (step S42: NO), the outline calculation module 253 terminates the three-dimensional Bezier division routine.

3-5. Winding number change amount calculation routine of the outline calculation module 253

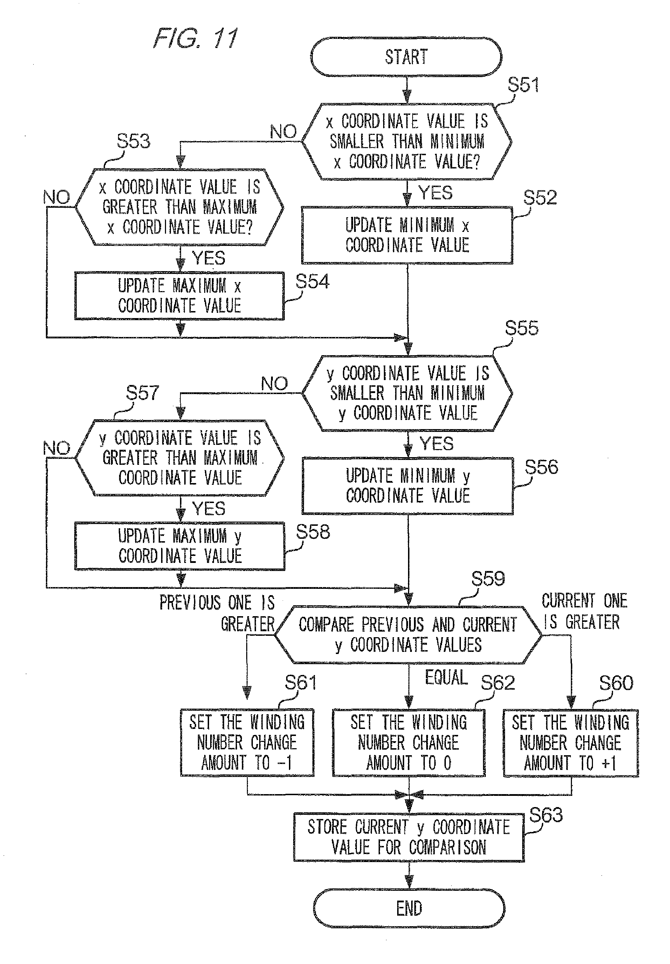

Next, FIG. 11 is a flowchart which describes a winding number change amount calculation routine of the outline calculation module 253. When the outline calculation module 253 calculates x and y coordinate values from the control point information set stored in the register P3 in each of the step S14 in FIG. 8, the step S27 in FIG. 9, the step S27 in FIG. 9, and the step S41 in FIG. 10, the outline calculation module 253 stores x and y coordinate values equivalent to previous minimum values into a register not shown. Further, in FIG. 11, the outline calculation module 253 determines whether or not the x coordinate value expressed by the control point information set retained in the register P3 is smaller than a minimum x coordinate value which has been stored in the outline calculation module 253 before (step S51). If the x coordinate value expressed by the control point information set retained in the register P3 is smaller than the minimum x coordinate value which has been stored before (step S51: YES), the outline calculation module 253 stores the x coordinate value of the control point information set retained in the register P3, as a minimum x coordinate value (step S52). The outline calculation module 253 then returns to the processing of the step S55.

Otherwise, if the x coordinate value expressed by the control point information set retained in the register P3 is not smaller than the minimum x coordinate value which has been stored before (step S51: NO), the outline calculation module 253 determines whether or not the x coordinate value of the control point information set retained in the register P3 is greater than the maximum *x* coordinate value which has been stored before (step S53). If the x coordinate value of the control point information set retained in the register P3 is greater than the maximum x coordinate value (step S53: YES), the outline calculation module 253 stores the x coordinate value of the control point information set retained in the register P3, as the maximum x coordinate value (step S54), and then goes to the processing of the step S55. If not (step S53: NO), the outline calculation module 253 directly goes to the processing of the step S55,

Next, the outline calculation module 253 determines whether or not the *y* coordinate value expressed by the control point information set retained in the register P3 is smaller than a minimum *y* coordinate value which has been stored in the outline calculation module 253 before (step S55). If the *y* coordinate value expressed by the control point information set retained in the register P3 is smaller than the minimum *y* coordinate value which has been stored before (step S55: YES), the outline calculation module 253 stores the *y* coordinate value of the control point information set retained in the register P3, as a minimum *y* coordinate value (step S56). The outline calculation module 253 then goes to the processing of the step S59.

Otherwise, if then coordinate value expressed by the control point information set retained in the register P3 is not smaller than the minimum coordinate value which has been stored before (step S55: NO), the outline calculation module 253 determines whether or not the *y* coordinate value of the control point information set retained in the register P3 is greater than a maximum *y* coordinate value which has been stored before (step S57). If the *y* coordinate value of the control point information set retained in the register P3 is greater than the maximum *y* coordinate value (step S57: YES), the outline calculation module 253 stores the *y* coordinate value of the control point information set retained in the register P3, as a maximum *y* coordinate value (step S58), and then goes to the processing of the step S59. If not (step S57: NO), the outline calculation module 253 directly goes to the processing of the step S59.

Next, the outline calculation module 253 compares the *y* coordinate value of the control point processed before (hereinafter a "previous *y* coordinate value") with the *y* coordinate value processed now (hereinafter a "current *y* coordinate value") (step S59). If the current *y* coordinate value is greater than the previous *y* coordinate value as a comparison result (step S59: current value is greater), this comparison result implies that the drawing direction of a outline extends from downside to upside. Therefore, the outline calculation module 253 sets "+1" as a winding number change amount for a pixel corresponding to the control point (step S60). Otherwise, If the previous $y$ coordinate value is greater than the current $y$ coordinate value as a comparison result (step S59: previous value is greater), this comparison result implies that the drawing direction of the outline extends from upside to downside. Therefore, the outline calculation module 253 sets "-1" as a winding number change amount for a pixel corresponding to the control point (step S61). Still otherwise, if the previous $y$ coordinate value is equal to the current $y$ coordinate value as a comparison result (step S59; equal), this comparison result implies that the drawing direction of a outline extends in the x axis direction. Therefore, the outline calculation module 253 sets "± 0" as a winding number change amount for a pixel corresponding to the control point (step S62). Further, the outline calculation module 253 stores, into the register of the module 253, the current $y$ coordinate value for comparison with a next $y$ coordinate value, in place of the previous y coordinate value (step S63). The outline calculation module 253 outputs the winding number change amount obtained as described above, together with x and $y$ coordinate values, to the outline rendering module 254.

3-6. Operation of the outline rendering module 254

The outline rendering module 254 renders outlines of a character by arranging pixels of a rendering color on a rendering area on the work memory 256, at memory addresses corresponding to coordinate values supplied from the outline calculation module 253. At this time, if any pixel has already been arranged to draw a outline at any of positions of pixels to be arranged to draw another outline on the rendering area, the outline rendering module 254 adds up winding number change amounts of two overlapping pixel at the same position, and stores an addition result into the work memory 256. Among seven registers r1 which the outline rendering module 254 includes, only registers r1 corresponding in number to a bit width notified of through a font rendering controller 252 from the CPU 11 are used in the foregoing addition processing.

3-7. Paint/background-composite/transfer module 255

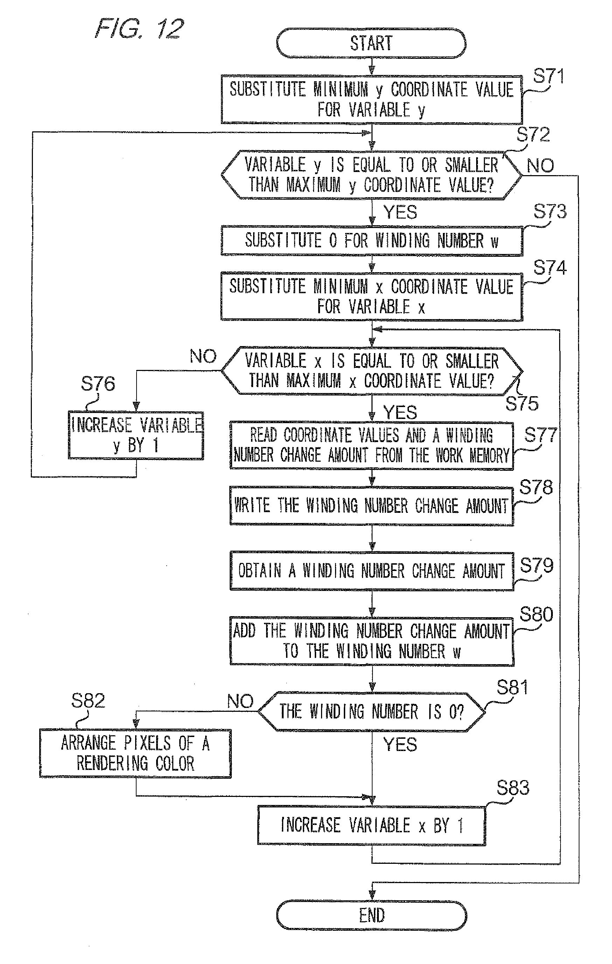

Next, FIG. 12 is a flowchart showing a painting routine of the paint/background-composite/transfer module 255. In FIG. 12, at first, the paint/background-composite/transfer module 255 substitutes the variable $y$ with a minimum $y$ coordinate value notified of by the outline calculation module 253 (step S71). Next, the paint/backgwound-composite/transfer module 255 determines whether the variable $y$ is equal to or smaller than the $y$ coordinate value notified of by the outline calculation module 253 or not (step S72). If the variable $y$ is equal to or smaller than the $y$ coordinate value (step S72: YES), the paint/background-composite/transfer module 255 substitutes the winding number w with an initial value zero (step S73).

Next, the paint/background-composite/transfer module 255 substitutes the variable $x$ with a minimum $x$ coordinate value notified of by the outline calculation module 253 (step S74). Next, the paint/background-composite/transfer module 255 determines whether the variable $x$ is equal to or smaller than the $x$ coordinate value notified of by the outline calculation module 253 or not (step S75). If the variable $x$ is equal to or smaller than the x coordinate value (step S75: YES), the paint/background-composite/transfer module 255 reads a coordinate value and a winding number change amount of a pixel stored in the rendering area in the work memory (step S77), and writes the read coordinate value and winding number change amount into the buffer of the paint/background-composite/transfer module 255 (step S78). Further, the paint/background-composite/transfer module 255 obtains a winding number change amount from information written into the buffer (step S79), adds the winding number change amount to the winding number $w$ and writes an addition result to the registers r2 of the paint/background-composite/transfer module 255 (step S80). Among seven registers r2 which the paint/background-composite/transfer module 255 have, registers r2 corresponding in number to a bit width notified of through the font rendering controller 252 from the CPU 11 are used in the foregoing addition/writing processing.

Next, the paint/background-composite/transfer module 255 determines whether the winding number w obtained as an addition result is zero or not (step S81). If the winding number w is zero (step S81: YES), the paint/background-composite/transfer module 255 adds 1 to the variable x without performing a paint processing (step S83), and returns to the processing of the step S75. Otherwise, if the winding number w is not zero (step S81: NO), the paint/background-composite/transfer module 255 arranges a pixel of a rendering color at the position corresponding to the coordinate value (step S82), and goes to the processing of the step S83. Further, the paint/background-composite/transfer module 255 adds 1 to the parameter $x$ (step S83), and returns to the processing of the step S75.

Thereafter, the paint/background-composite/transfer module 255 repeatedly performs the processings of the step S75 and S77 to S83 while increasing the variable $x$ one by one in the step S83. Accordingly, the Paint/background-composite/transfer module 255 scans the rendering area on the work memory 256 for one scan line, obtains a winding number $w$ equivalent to a specified bit width for each of pixels existing on the one scan line, and stores each obtained winding number. Further, the paint/background-composite/transfer module 255 specifies segments inside outlines on the scan line, based on whether each stored winding number is zero or any other value. The paint/background-composite/transfer module 255 arranges pixels of a rendering color in the specified segments, thereby to paint corresponding areas in the rendering color. Further, the paint/background-composite/transfer module 255 increases the variable *y* one by one in the step S76, to carry out the processing as described above for one scan line, repeatedly for all scan lines on the rendering area on the work memory 256. As a result, the paint/background-composite/transfer module 255 paints all areas inside the outlines on the rendering area, in a rendering color.

In the embodiment described above, plural bit widths are prepared each as a bit width for registers r1 and r2 to storing variables (a winding number change amount and a winding number). Among the plural bit widths, the embodiment uses one which the designer of the program stored in the ROM 12 thinks is necessary and sufficient as a bit width for the variables. Thus, the bit width is more flexibly changeable depending on characteristics of a font data set, compared with related art which uses a fixed bit width.

Thus, a necessary and sufficient bit width is used for the variables, wasteful use of the work memory 256 decreases, and use efficiency improves accordingly. For example, in case of a font data set having a too large data size to contain in the work memory, a processing for dividing the font data set into plural blocks needs to be carried out. However, according to the embodiment, wasteful use of the work memory 256 decreases so that a font data set having such a large data size can be rendered without dividing the font data set.

Further, in case where a bit width of variables (a winding number change amount and a winding number) is 1 bit, two values are available for the variables, as in the even-odd method (also referred to as the odd/even determination method). That is, according to the embodiment, the same painting as the even-odd method (the odd/even determination method) can be achieved when 1 bit as a bit width of variables. When 3 bits or 7 bits are specified as a bit width of the variables, the non-zero winding number method (non-zero painting method) can be achieved.

4. Modifications

The invention is not restricted to the embodiment described above. The embodiment may be modified as follows. At least two of the modifications may be combined.

4-1. Modification 1

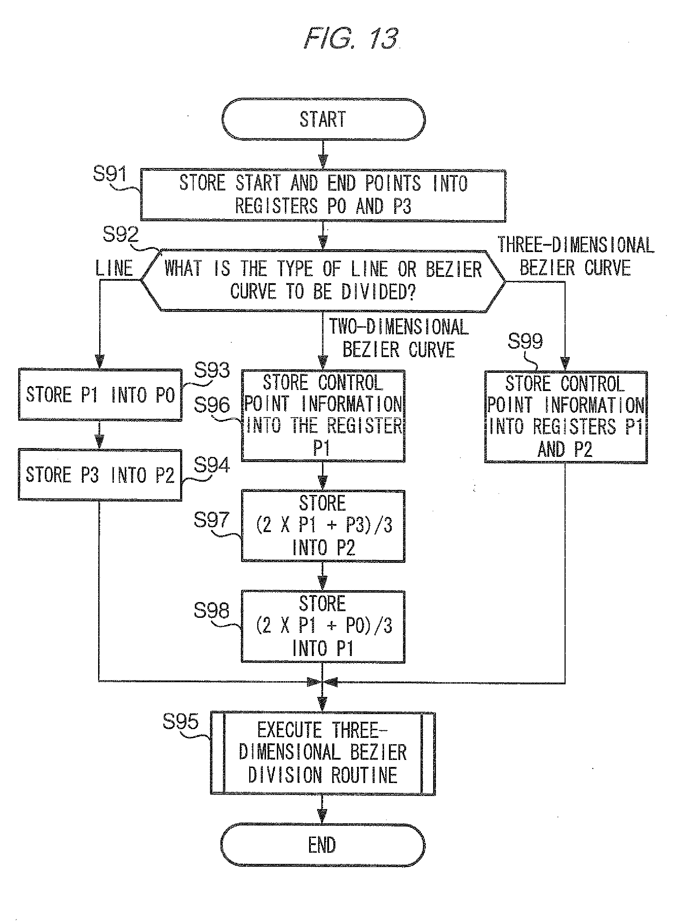

The outline calculation module 253 may carry out processings shown in FIG. 13 in place of processings shown in FIGS. 7 to 9. The processings shown in FIG. 13 relate to a method in which a three-dimensional Bezier division processing substitutes for line and two-dimensional Bezier division processings. With this configuration, the font processor 25 (particularly the outline calculation module 253) can reduce an area occupied by the font processor 25.

In FIG. 13, the outline calculation module 253 receives control point information sets included in a font data set, sequentially in an order from one assigned with the smallest control point number. Among the received control point information sets, the outline calculation module 253 extracts a control point information set of an on-curve point assigned with a minimum control point number, as a control point information set of an on-curve point as a start point. Further, the outline calculation module 253 extracts a control point information set of an on-curve point assigned with a second minimum control point number, as a control point information set of an on-curve point as an end point. The outline calculation module 253 stores the control point information set of the on-curve point as a start point into the register P0 among four registers P0 to P3, as well as the control point information set of the on-curve point as an end point into the register P3 (step S91).

Next, the outline calculation module 253 determines a type of connection between the start and end points described above, i.e., whether the start and end points are connected by a line or a Bezier curve (step S92). If the type is a line (step S92: line), the outline calculation module 253 copies and stores a control point information set stored in the register P0 into the register P1 (step S93). Next, the outline calculation module 253 copies and stores a control point information set stored in the register P3 into the register P2 (step S94).

Otherwise, if the type is determined to be a two-dimensional Bezier curve in the step S92 (step S92: two-dimensional Bezier curve), the outline calculation module 253 stores, into the register P1, a control point information set of an off-curve point between the start and end points (step S96). Further, the outline calculation module 253 multiplies the control point information set stored in the register P1 by 2, to obtain a multiplication result. The outline calculation module 253 further adds a control point information set stored in the register P3 to the multiplication result, to obtain an addition result, and divides the addition result by 3. The outline calculation module 253 stores a result obtained in this manner into the register P2 (step S97). Further, the outline calculation module 253 multiplies the control point information set stored in the register P1 by 2, to obtain a multiplication result. The outline calculation module 253 further adds a control point information set stored in the register P0 to the multiplication result, to obtain an addition result, and divides the addition result by 3. The outline calculation module 253 stores a result obtained in this manner into the register P2 (step S98).

Still otherwise, if the type is determined to be a three-dimensional Bezier curve in the step S92 (step S92: three-dimensional Bezier curve), the outline calculation module 253 stores, into the register P1, the outline calculation module 253 stores, into the register P1, a control point information set of an off-curve point having the smallest control point number among off-curve points existing between start and end points, and stores, into the register P2, an off-curve point having the greatest control point number among the off-curve points (step S6). Upon completion of one of the steps S94, S98, and S99, the outline calculation module 253 further executes a three-dimensional Bezier division routine shown in FIG. 10 described previously (step S95).

With the configuration as described above, both the line and two-dimensional Bezier division processings may be substituted with only the three-dimensional Bezier division processing.

4-2. Modification 2

In the configuration of the embodiment, the outline calculation module 253 calculates positions of outlines on the rendering area on the work memory 256, and the outline rendering module 254 renders the outlines, based on the calculated positions. In this configuration, there is a case that a outline protrudes beyond an end of the rendering area.

Hence, in case of rendering a outline on the basis of a calculated position, the outline rendering module 254 determines whether the outline protrudes beyond an end of the rendering area or not. As a result of determination, if a outline protrudes beyond an end of the rendering area in the extending direction of scan lines, the outline rendering module 254 sets the end of the rendering area as an end position of the protruding outline. Otherwise, as a result of determination, if a outline protrudes beyond an end of the rendering area in a direction perpendicular to the extending direction of scan lines, the outline rendering module 254 removes the outline.

FIG. 14 shows an example of processings in Modification 2.

As shown in FIG. 14, when a character "A" is drawn on a rendering area a1, outlines l2 and l3 indicated by a broken line protrude beyond the rendering area a1 in the scanning direction thereof (*x*-axis direction). In this case, of coordinate values of positions of the outlines l2 and l3, the outline rendering module 254 maintains *x* coordinate values unchanged but changes *y* coordinate values to such y coordinate values that correspond to an end of the rendering area. As a result, the outlines l2 and l3 are changed to outlines l21 and l31 indicated by solid lines in the figure. On the other side, the outline l1 protrudes beyond the rendering area a1 in a direction perpendicular to the scanning direction (*y*-axis direction). In this case, the outline rendering module 254 removes the outline 11. In this manner, the outline l1 disappears. However, since the scanning direction is the *x*-axis direction, the paint/background-composite/transfer module 255 can paint inside the outlines of the character "A" regardless of whether the outline l1 exists or not.

Accordingly, in case where a position of a outline on the rendering area is calculated and the outline is rendered based on the calculated position, an area inside the outline can be painted even when the outline protrudes beyond an end of the rendering area.

4-3. Modification 3

As has been described above, bit widths which the designer of the program thinks are adequate are adopted in the embodiment. However, even with use of such bit widths, a winding number change amount or a winding number may overflow used one of the bit widths when the outline rendering module 254 or the paint/background-composite/transfer module 255 obtains a winding number change amount or a winding number. In this case, an error processing for stopping a processing is carried out, according to technologys of related art. Such an error processing is, however, often undesirable because the error processing delays rendering processings. Hence, when a variable (a winding number change amount or a winding number) overflows a specified data size, a wraparound processing for returning the value of the variable to zero is carried out to continue processings by the outline rendering module 254 and the paint/background-composite/transfer module 255. In this case, the rendering processing is not stopped but the winding number is unintentionally returned to zero. There occurs a situation that an unpainted part remains inside outlines. However, an area which may cause a variable to overflow a data size is very small in many cases, and does not involve a serious problem such as deterioration in image quality.

Bit widths available for variables are not limited to the example of 1 bit, 3 bits, and 7 bits. Any other bit width than the foregoing bit widths is also available, and the number of available bit widths may be any other number than three.

4-4. Modification 4

The embodiment is configured so as to separately specify a bit width for registers r1 which are used when the outline rendering module 254 obtains a winding number change amount, and a bit width for registers r2 which are used for when the paint/background-composite/transfer module 255. However, a winding number change amount and a winding number are both variables of the one same nature, from a viewpoint of how many bit widths for registers should be prepared for a winding number change amount and a winding number. Therefore, bit widths bit width may be specified simultaneously for the winding number change amount and the winding number, or one common bit width may be specified for the winding number change amount and the winding number.

4-5. Modification 5

In the embodiment, instruction information indicating a data size of a winding number is written in a program. The font rendering controller 252 receives the instruction information from the CPU 11, and specifies the data size indicated by the instruction information, as a data size of the winding number. This configuration may be modified as follows.

For example, a font data set may include instruction information indicating a data size of the winding number, and the font rendering controller 252 may specify the data size indicated by the instruction information included in the font data set, as a data size of the winding number. With this configuration, a designer of a font data set can arbitrarily set a bit with of a winding number.

Otherwise, a user may specify a data size of a winding number by manipulating a manipulation unit such as a key 22, and the font rendering controller 252 may further specify the specified data size, as a data size of the winding number. With this configuration, a user can arbitrarily specify a bit width of the winding number.

4-6. Modification 6

As an alternative configuration, the work memory 256 may be divided into plural work memories so that different modules can independently access the plural work memories. With this configuration, the processing speed can be improved by alternately using the plural work memories. In the above embodiment, the outline calculation module 253, outline rendering module 254, and paint/background-composite/transfer module 255 are respectively separate modules. In place of these modules 253, 254, and 255, one single module which can integrally perform all of functions of the modules 253, 254, and 255 may be used.

4-7. Modification 7

The embodiment has been described referring to a case that a character image in which inside of outlines is painted is displayed on the image-retaining liquid crystal display 15. Any configuration may be adopted insofar as an image as a result of rendering can be output. For example, a configuration of printing an image on a recording paper sheet or the like is available. Specifically, in the configuration, the display control device 16 in the embodiment may be replaced with a print control unit, and the image-retaining liquid crystal display 15 may be replaced with a printing unit. The print control unit controls the printing unit so as to print an image on a paper sheet. The printing unit prints an image on a recording paper sheet, according to a thermal transfer method or an inkjet method. More specifically, for example, image data equivalent to characters to be printed on one recording paper sheet is written into the VRAM 14. Further, the CPU 11 receives a transfer signal, and transfers an image expressed by the image data written into the VRAM 14 to the print control unit. The CPU 11 further gives an instruction to print the image. In accordance with this instruction, the print control unit causes the printing unit to print out characters expressed by the transferred image data.

In brief, the invention is applicable to any image output device insofar as the image output device includes the font processor 25 and an output unit that outputs a result of painting areas inside outlines in a rendering color by using the font processor 25.

4-8. Modification 8

The embodiment has been described, referring to cases of rendering characters "□" and "D". However, characters to be rendered may be Japanese characters, such as Hiragana, Katakana, and Kanji, and alphabetic characters. Further, symbols "+" and "-", and shapes such as circles and polygons are available as characters. That is, the invention is applicable insofar as a font data set is obtained and characters are rendered in accordance with the font data set.

4-9. Modification 9

The rendering device or image output device according to the invention is applicable to, for example, an ordinary personal computer or a tablet computer such as a PDA (Personal Digital Assistants). Further, programs which describe procedures shown in the flowcharts described above, and font data sets (contour data or outline data) can be provided or distributed, recorded on a recording medium such as a magnetic tape, a magnetic disk, a floppy disk (registered trademark), an optical recording medium, a magneto-optical recording medium, a CD (Compact Disk), a DVD (Digital Versatile Disk), or a RAM.

In the above embodiment, the outline calculation module 253, outline rendering module 254, and paint/background-composite/transfer module 255 are respectively constituted as separate hardware components. A part or all of these modules 253, 254, and 255 may be constituted as functions of a software program which is executed by the CPU 11. That is, a program as follows may be configured as a program according to the invention. The program causes a computer to function as: a outline rendering unit that renders outlines of a character on a rendering area, based on outline data of the character; a specifying unit that specifies a data size of a variable which increases/decreases depending on a drawing direction of each of the outlines, when the rendering area where the outlines are rendered is scanned along predetermined scan lines; a variable storage unit that scans the rendering area where the outlines are rendered, for each of the scan lines, and obtains and stores the variable of the data size specified by the specifying unit, for each of pixels existing on the each of the scan lines; and a paint unit that specifies areas inside the outlines on the rendering area, based on the variable stored by the variable storage unit, and arranges pixels of a rendering color in the specified areas, thereby to paint the areas in the rendering color.

## Claims

1. A rendering device comprising:

   a outline rendering unit configured to render outlines of a character on a rendering area, based on outline data of the character;
   a specifying unit configured to specify a data size of a variable which increases/decreases depending on a drawing direction of each of the outlines, when the rendering area where the outlines are rendered is scanned along predetermined scan lines;
   a variable storage unit configured to scan the rendering area where the outlines are rendered, for each of the scan lines, obtain and store the variable of the data size specified by the specifying unit, for each of pixels existing on the each of the scan lines; and
   a paint unit configured to specify areas inside the outlines on the rendering area, based on the variable stored by the variable storage unit, and arrange pixels of a rendering color in the specified areas, thereby to paint the specified areas in the rendering color.

2. The rendering device according to Claim 1, wherein the variable storage unit is configured to obtain the variable by performing a wraparound processing for returning a value of the variable to zero when the variable overflows the data size specified by the specifying unit.

3. The rendering device according to Claim 1 or Claim 2, wherein
   the outline rendering unit is configured to determine whether the outlines protrude beyond ends of the rendering area, when the outlines are rendered on the rendering area, based on positions of the outlines which are calculated based on the outline data of the character, and
   as a result of the determination, if one of the outlines protrudes beyond the rendering area in an extending direction of the scan lines, the outline rendering unit is configured to set an end of the rendering area as a position of the protruding one of the outlines, or
   as a result of the determination, if one of the outlines protrudes beyond the rendering area in a direction perpendicular to the extending direction of the scan lines, the outline rendering unit is configured to remove the protruding one of the outlines.

4. The rendering device according to any one of preceding Claims 1-3, wherein
   instruction information indicating a data size of a variable is written in a program, and
   the specifying unit specifies the data size indicated by the instruction information, as the data size of the variable which increases/decreases.

5. The rendering device according to any one of preceding Claims 1-3, wherein
   the outline data includes instruction information indicating a data size of a variable, and
   the specifying unit is configured to specify the data size indicated by the instruction information, as the data size of the variable which increases/decreases.

6. The rendering device according to any one of preceding Claims 1-5, wherein
   the specifying unit is configured to specify, as the data size of the variable, a data size specified in accordance with a manipulation by a user.

7. An image output device comprising:

   the rendering device according to any one of preceding Claims 1-6; and
   an output unit configured to output, as a character image, a result of painting the specified areas in the rendering color by the painting unit of the rendering device.

8. A computer-readable storage medium storing a program causing a computer device to execute a process, the process comprising:

   rendering outlines of a character on a rendering area, based on outline data of the character;
   specifying a data size of a variable which increases/decreases depending on a drawing direction of each of the outlines, when the rendering area where the outlines are rendered is scanned along predetermined scan lines;
   scanning the rendering area where the outlines are rendered, for each of the scan lines;
   storing the variable of the specified data size, for each of pixels existing on the each of the scan lines;
   specifying areas inside the outlines on the rendering area, based on the stored variable; and
   arranging pixels of a rendering color in the specified areas, thereby to paint the specified areas in the rendering color.

9. A method comprising:

   rendering outlines of a character on a rendering area, based on outline data of the character;
   specifying a data size of a variable which increases/decreases depending on a drawing direction of each of the outlines, when the rendering area where the outlines are rendered is scanned along predetermined scan lines;

scanning the rendering area where the outlines are rendered, for each of the scan lines;

storing the variable of the specified data size, for each of pixels existing on the each of the scan lines;

specifying areas inside the outlines on the rendering area, based on the stored variable; and arranging pixels of a rendering color in the specified areas, thereby to paint the specified areas in the rendering color.

**10.** A computer program configured, when executed on a computer, to cause the computer to carry out the method according to claim 9.

**11.** A computer program product comprising:

the computer-readable storage medium according to claim 8.

## FIG. 1

FIG. 3

| CONTROL POINT No. | CONTROL POINT TYPE | POSITION |
|---|---|---|
| 1 | ON CURVE | (X1,Y1) |
| 2 | ON CURVE | (X2,Y2) |
| 3 | OFF CURVE | (X3,Y3) |
| 4 | ON CURVE | (X4,Y4) |
| ⋮ | ⋮ | ⋮ |
| 12 | ON CURVE | (X12,Y12) |
| TOTAL CONTOURS | 2 | |
| CONTROL POINT No. OF END POINT | 7,12 | |

FIG. 14

*FIG. 4*

*FIG. 5*

FIG. 6

EP 2 045 777 A2

*FIG. 2*

A ⎯◻ ⎯⎯⎯⎯⎯⎯⎯⎯⎯⎯ ◻⎯ B
t=0          P          t=1

C ⎯◻          ○⎯ D
t=0

Q

◻⎯ E
t=1

*FIG. 7*

START

S1  STORE START AND END POINTS INTO
    REGISTERS P0 AND P3

S2  WHAT IS THE TYPE OF LINE OR BEZIER
    CURVE TO BE DIVIDED?

LINE ←

TWO-DIMENSIONAL
BEZIER CURVE

THREE-DIMENSIONAL
BEZIER CURVE

S4  STORE CONTROL POINT
    INFORMATION INTO
    THE REGISTER P1

S6  STORE CONTROL POINT
    INFORMATION INTO
    REGISTERS P1 AND P2

S3  EXECUTE A LINE
    DIVISION
    ROUTINE

S5  EXECUTE A TWO-
    DIMENSIONAL
    BEZIER DIVISION
    ROUTINE

S7  EXECUTE A TWO-
    DIMENSIONAL
    BEZIER DIVISION
    ROUTINE

RETURN

*FIG. 8*

START

S11
DISTANCE BETWEEN PO AND P3 IS
EQUAL TO OR SMALLER THAN A
DEFINITE VALUE?

NO

S12
RETAIN P3 IN A
STACK

S13
CALCULATE A
MIDDLE POINT
BETWEEN PO AND
P3 AND STORE
THE MIDDLE
POINT INTO P3

YES

S14
CALCULATE A WINDING NUMBER CHANGE
AMOUNT AND OUTPUT THE AMOUNT TOGETHER
WITH COORDINATE VALUES OF P3

S15
CONTROL POINT INFORMATION IS
RETAINED IN THE STACK

NO

YES

S16
COPY PO TO P3

S17
EXTRACT CONTROL POINT INFORMATION
FROM THE STACK

RETURN

## FIG. 9

START

S21

DISTANCES BETWEEN P0 AND P1,
P1 AND P3, AND P0 AND P3 ARE
ALL EQUAL TO OR SMALLER THAN
A DEFINITE VALUE?

NO

RETAIN P3 IN A STACK — S22

CALCULATE A MIDDLE
POINT BETWEEN P1 AND
P3 AND STORE THE
MIDDLE POINT INTO P3 — S23

RETAIN P3 BY STACK
FUNCTION — S24

CALCULATE A MIDDLE
POINT BETWEEN P0 AND
P1 AND STORE THE
MIDDLE POINT INTO P1 — S25

CALCULATE A MIDDLE
POINT BETWEEN P1 AND
P3 AND STORE THE
MIDDLE POINT INTO P3 — S26

YES

CALCULATE A WINDING NUMBER
CHANGE AMOUNT AND OUTPUT THE
AMOUNT TOGETHER WITH
COORDINATE VALUES OF P3 — S27

CONTROL POINT INFORMATION
IS RETAINED IN THE STACK — S28

NO

YES — S29

COPY P0 TO P3

EXTRACT CONTROL POINT
INFORMATION FROM THE STACK AND
STORE THE INFORMATION INTO P1
AND P3 — S30

RETURN

*FIG. 10*

```
                              ┌──────────────┐
                              │    START     │
                              └──────┬───────┘
                                     │                        S31
                            ┌────────▼─────────────┐
                            │ DISTANCES BETWEEN P0 │
                            │ AND P1, P1 AND P2, P2│
                 NO         │ AND P3, AND P0 AND P3│
          ◄─────────────────│ ARE ALL EQUAL TO OR  │
          │                 │ SMALLER THAN A DEFINITE│
          │                 │        VALUE?        │
          │                 └──────────┬───────────┘
          │                         YES │              S41
┌──────────────────────┐     ┌──────────▼───────────┐
│  RETAIN P3 IN A STACK│ S32 │ CALCULATE A WINDING NUMBER│
└──────────┬───────────┘     │ CHANGE AMOUNT AND OUTPUT │
           │                 │ THE AMOUNT TOGETHER WITH │
┌──────────▼───────────┐ S33 │ COORDINATE VALUES OF P3  │
│ CALCULATE A MIDDLE POINT│   └──────────┬───────────┘
│ BETWEEN P2 AND P3 AND STORE│           │         S42
│ THE MIDDLE POINT INTO P3│   ┌──────────▼───────────┐  NO
└──────────┬───────────┘     │   CONTROL POINT       │
           │                 │ INFORMATION IS RETAINED│──►
┌──────────▼───────────┐ S34 │     IN THE STACK      │
│ RETAIN P3 IN THE STACK│     └──────────┬───────────┘  S43
└──────────┬───────────┘             YES │
           │                 ┌──────────▼───────────┐
┌──────────▼───────────┐ S35 │     COPY P0 TO P3    │
│ CALCULATE A MIDDLE POINT│   └──────────┬───────────┘
│ BETWEEN P1 AND P2 AND STORE│           │         S44
│ THE MIDDLE POINT INTO P2│   ┌──────────▼───────────┐
└──────────┬───────────┘     │ EXTRACT CONTROL POINT │
           │                 │ INFORMATION FROM THE STACK│
┌──────────▼───────────┐ S36 │ AND STORE THE INFORMATION│
│ CALCULATE A MIDDLE POINT│   │  INTO P1, P2, AND P3 │
│ BETWEEN P0 AND P1 AND STORE│└──────────┬───────────┘
│ THE MIDDLE POINT INTO P1│              │
└──────────┬───────────┘                │
           │                            │
┌──────────▼───────────┐ S37            │
│ CALCULATE A MIDDLE POINT│             │
│ BETWEEN P2 AND P3 AND STORE│          │
│ THE MIDDLE POINT INTO P3│             │
└──────────┬───────────┘                │
           │                            │
┌──────────▼───────────┐ S38            │
│  RETAIN P3 IN A STACK│                │
└──────────┬───────────┘                │
           │                            │
┌──────────▼───────────┐ S39            │
│ CALCULATE A MIDDLE POINT│             │
│ BETWEEN P1 AND P2 AND STORE│          │
│ THE MIDDLE POINT INTO P2│             │
└──────────┬───────────┘                │
           │                            │
┌──────────▼───────────┐ S40            │
│ CALCULATE A MIDDLE POINT│             │
│ BETWEEN P2 AND P3 AND STORE│          │
│ THE MIDDLE POINT INTO P3│             │
└──────────┬───────────┘                │
           │                            │
           └────────────┐    ┌──────────▼───────────┐
                        │    │       RETURN         │
                        │    └──────────────────────┘
```

*FIG. 11*

START

S51
x COORDINATE VALUE IS SMALLER THAN MINIMUM x COORDINATE VALUE?

NO →

S53
x COORDINATE VALUE IS GREATER THAN MAXIMUM x COORDINATE VALUE?

NO →

YES ↓ S52
UPDATE MINIMUM x COORDINATE VALUE

YES ↓
S54
UPDATE MAXIMUM x COORDINATE VALUE

S55
y COORDINATE VALUE IS SMALLER THAN MINIMUM y COORDINATE VALUE

NO →

S57
y COORDINATE VALUE IS GREATER THAN MAXIMUM COORDINATE VALUE

NO →

YES ↓ S56
UPDATE MINIMUM y COORDINATE VALUE

YES ↓
S58
UPDATE MAXIMUM y COORDINATE VALUE

S59
PREVIOUS ONE IS GREATER / COMPARE PREVIOUS AND CURRENT y COORDINATE VALUES \ CURRENT ONE IS GREATER

S61
SET THE WINDING NUMBER CHANGE AMOUNT TO −1

EQUAL S62
SET THE WINDING NUMBER CHANGE AMOUNT TO 0

S60
SET THE WINDING NUMBER CHANGE AMOUNT TO +1

S63
STORE CURRENT y COORDINATE VALUE FOR COMPARISON

END

*FIG. 12*

START

SUBSTITUTE MINIMUM y COORDINATE VALUE FOR VARIABLE y — S71

VARIABLE y IS EQUAL TO OR SMALLER THAN MAXIMUM y COORDINATE VALUE? — S72  NO

YES

SUBSTITUTE 0 FOR WINDING NUMBER w — S73

SUBSTITUTE MINIMUM x COORDINATE VALUE FOR VARIABLE x — S74

VARIABLE x IS EQUAL TO OR SMALLER THAN MAXIMUM x COORDINATE VALUE? — S75  NO

S76  INCREASE VARIABLE y BY 1

YES

READ COORDINATE VALUES AND A WINDING NUMBER CHANGE AMOUNT FROM THE WORK MEMORY — S77

WRITE THE WINDING NUMBER CHANGE AMOUNT — S78

OBTAIN A WINDING NUMBER CHANGE AMOUNT — S79

ADD THE WINDING NUMBER CHANGE AMOUNT TO THE WINDING NUMBER w — S80

THE WINDING NUMBER IS 0? — S81  NO

S82  ARRANGE PIXELS OF A RENDERING COLOR

YES

INCREASE VARIABLE x BY 1 — S83

END

## FIG. 13

START

S91 — STORE START AND END POINTS INTO REGISTERS P0 AND P3

S92 — WHAT IS THE TYPE OF LINE OR BEZIER CURVE TO BE DIVIDED?

LINE

THREE-DIMENSIONAL BEZIER CURVE

TWO-DIMENSIONAL BEZIER CURVE

S93 — STORE P1 INTO P0

S94 — STORE P3 INTO P2

S96 — STORE CONTROL POINT INFORMATION INTO THE REGISTER P1

S97 — STORE (2 X P1 + P3)/3 INTO P2

S98 — STORE (2 X P1 + P0)/3 INTO P1

S99 — STORE CONTROL POINT INFORMATION INTO REGISTERS P1 AND P2

S95 — EXECUTE THREE-DIMENSIONAL BEZIER DIVISION ROUTINE

END

**EP 2 045 777 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6251164 A
- JP 5265428 A
- JP 52654282 A